# EUROPEAN PATENT SPECIFICATION

(11) **EP 4 398 424 B1**
(45) Date of publication and mention of the grant of the patent: **28.01.2026**
(21) Application number: 22863297.2
(22) Date of filing: 25.08.2022
(51) Int. Cl.: H01R 12/71, H04M 1/02, G06K 7/00, G06K 13/08, H04B 1/3816, H04B 1/3818

(54) **CARD HOLDER STRUCTURE, CARD HOLDER ASSEMBLY AND ELECTRONIC APPARATUS**
KARTENHALTERSTRUKTUR, KARTENHALTERANORDNUNG UND ELEKTRONISCHE VORRICHTUNG
STRUCTURE DE SUPPORT DE CARTE, ENSEMBLE SUPPORT DE CARTE ET APPAREIL ÉLECTRONIQUE

(30) Priority: 01.09.2021 CN 202111019645
(43) Date of publication of application: 10.07.2024
(73) Proprietor: Vivo Mobile Communication Co., Ltd., Dongguan, Guangdong 523863 (CN)
(72) Inventor: LIN, Zhenye, Dongguan, Guangdong 523863 (CN); GUO, Xu, Dongguan, Guangdong 523863 (CN)
(74) Representative: Conti, Marco
(86) International application number: PCT/CN2022/114798
(87) International publication number: WO 2023/030159

(56) References cited:
- CN-A- 110 890 650
- CN-A- 111 711 007
- CN-A- 112 909 601
- CN-A- 113 745 867
- CN-U- 210 866 560
- CN-U- 212 162 120
- JP-A- 2006 147 215
- US-A1- 2017 093 057

## Description

### TECHNICAL FIELD

This application relates to the field of terminal technologies, and specifically, to a card tray structure, a card tray assembly, and an electronic device.

### BACKGROUND

Mobile phones have become practical tools inseparable from daily life and work of people. At present, the dual-SIM dual-standby function has already been a standard configuration on a mobile phone. Cards are placed in the mobile phone through cooperation between a card tray and a card holder. During the cooperation between the card tray and the card holder, a steel sheet arranged in the card tray increases a thickness of the card tray. As a result, after being cooperated, the card holder and the card tray have a large overall thickness and consume a large space, which is not conducive to the thinning and miniaturization design of a device and affects user experience.

CN212162120U discloses a card tray comprising a bracket. The bracket includes a first end and a second end, and has a first surface and a second surface located between the first and second ends, with the first surface and the second surface facing away from each other. The first surface is provided with a first card slot, and the second surface is provided with a second card slot. The bracket further includes an ejection mechanism receiving space, which is located at the first end. The first card slot may include a first sub-slot and a second sub-slot, which are arranged in the ejection direction of the card tray. The first sub-slot is disposed near the first end, and the second sub-slot is disposed near the second end. The first and second sub-slots may be in communication with each other. CN212162120U further discloses a partition plate disposed on the bracket and located between the first card slot and the second card slot, for fully or partially separating the first card slot and the second card slot.

CN110890650A discloses a card holds in palm, cassette structure and electronic equipment, and the card holds in the palm including the card holds in the palm the skeleton, and the card holds in the palm the skeleton and has first side and the second side that deviates from mutually with first side, and first side is equipped with first draw-in groove, and the second side is equipped with the second draw-in groove, and first draw-in groove includes first sub-draw-in groove and second sub-draw-in groove, and first sub-draw-in groove communicates each other with the second sub-draw-in groove and has the slot part of sharing. The card seat is used for assembling the card support. CN110890650A further discloses a partition plate disposed on the bracket and located between the first card slot and the second card slot, for fully or partially separating the first card slot and the second card slot.

US2017093057A1 discloses an electronic card connector includes a metal shell, a tray, a first terminal block, a second terminal block and a third terminal block. The metal shell is provided on a circuit board and cooperates with the circuit board to define a slot. The tray comprises an insulative body and a shielding unit. A first receiving groove of the insulative body receives a SD card and second and third receiving grooves of the insulative body respectively receive first and second SIM cards. The shielding unit is made of metal, provided in the insulative body and positioned between the first receiving groove and the second receiving groove and the third receiving groove, so as to shield the electromagnetic interference from the SD card.

### SUMMARY

An objective of embodiments of this application is to provide a card tray structure, a card tray assembly, and an electronic device as defined in the appended set of claims, to resolve the problem that due to a large thickness of a card tray, an overall thickness is relatively large after cooperation between a card holder and the card tray, which is not conducive to thinning.

According to a first aspect, an embodiment of this application provides a card tray structure, including:
a card tray, where two first card slots are arranged on one side of the card tray, and a second card slot is arranged on an other side of the card tray.

The card tray includes a supporting body, a first connecting beam, and a second connecting beam. The supporting body is a frame enclosed by a frame edge. A first platform portion is arranged at an edge on one side of the frame edge to form the first card slot, and a second platform portion is arranged at an edge on an other side of the frame edge to form the second card slot. Two ends of the first connecting beam are respectively connected to the frame edge, and the two first card slots are respectively located on two sides of the first connecting beam.

Two ends of the second connecting beam are respectively connected to the frame edge. The second platform portion and the second connecting beam define the second card slot. The first connecting beam is arranged correspondingly to the second card slot, and the second connecting beam is arranged correspondingly to the first card slots.

A surface of a side of the first connecting beam facing the second card slot is planar and coplanar with a surface of the second platform portion.

A surface of a side of the second connecting beam facing the first card slots is planar and coplanar with a surface of the first platform portion.

The card tray further includes:
a limiting baffle, where the limiting baffle is arranged at an edge of a frame edge of the supporting body.

A sealing member is arranged on a side of the limiting baffle close to the frame edge.

The sealing member extends into the second card slot and forms a convex rib on an inner side wall of the second card slot.

Convex ribs are arranged on inner side walls of the first card slots and the second card slot.

According to a second aspect, an embodiment of this application provides a card tray assembly, including:
the card tray structure described in the foregoing embodiment; and
a card holder, where the card tray structure is arranged on the card holder.

The card holder includes: a seat body, an ejection mechanism, and a detection mechanism. A terminal is arranged on the seat body, the ejection mechanism is arranged on the seat body, the detection mechanism includes an elastic arm, and one end of the elastic arm is connected to the seat body.

In a case that the ejection mechanism is in a first state, an other end of the elastic arm stops against the terminal and is electrically communicated with the terminal.

In a case that the ejection mechanism is in a second state, the ejection mechanism drives the other end of the elastic arm to detach from the terminal.

In a case that the card tray is clamped on the seat body, the card tray drives the ejection mechanism to switch from the first to the second state.

The elastic arm is arranged adjacent to an edge of the seat body, and the elastic arm extends along the edge of the seat body.

The ejection mechanism includes:
a rotating rod, where the rotating rod is rotatably connected to the seat body, and one end of the rotating rod is connected to the other end of the elastic arm.

In a case that the ejection mechanism is in the second state, the one end of the rotating rod drives the other end of the elastic arm to detach from the terminal.

The ejection mechanism further includes:
an ejector rod, where one end of the ejector rod is connected to an other end of the rotating rod, the ejector rod extends along the edge of the seat body, and in a case that the ejector rod moves, the ejector rod drives the rotating rod to rotate.

One end of the rotating rod has an arc-shaped surface, and the arc-shaped surface stops against the other end of the elastic arm.

Alternatively, one end of the rotating rod is provided with a chute, and the other end of the elastic arm is movably arranged in the chute.

Alternatively, the other end of the elastic arm is provided with a chute, the chute extends along the length direction of the elastic arm, and one end of the rotating rod is movably arranged in the chute.

A contact convex point is arranged in a region of the other end of the elastic arm that stops against the terminal.

An insulation layer is arranged between the seat body and the terminal.

The seat body is provided with an accommodating groove, the card tray is detachably arranged in the accommodating groove, and the card tray includes: a limiting baffle, the limiting baffle is arranged at an edge of a frame edge of a supporting body, and at least part of the limiting baffle is located outside the accommodating groove.

According to a third aspect, an embodiment of this application provides an electronic device, including the card tray assembly described in the foregoing embodiment.

In the embodiments of this application, a card tray structure includes a card tray. A first card slot is arranged on one side of the card tray, and a second card slot is arranged on an other side of the card tray. The card tray includes a supporting body. The supporting body is a frame enclosed by a frame edge. A first platform portion is arranged at an edge on one side of the frame edge to form the first card slot, and a second platform portion is arranged at an edge on an other side of the frame edge to form the second card slot. The card tray further includes: a first connecting beam, where two ends of the first connecting beam are respectively connected to the frame edge, there are two first card slots, and the two first card slots are respectively located on two sides of the first connecting beam; and a second connecting beam, where two ends of the second connecting beam are respectively connected to the frame edge, and the second platform portion and the second connecting beam define the second card slot. The first connecting beam is arranged correspondingly to the second card slot, and the second connecting beam is arranged correspondingly to the first card slot. In the card tray structure of the embodiments of this application, the supporting body is the frame enclosed by the frame edge. The first connecting beam and the second connecting beam may be arranged to enhance overall strength of the card tray, and the card tray is not easily deformed. The first connecting beam is arranged correspondingly to the second card slot. In a case that a card is placed in the second card slot, the card may be supported and limited by the first connecting beam, and may be prevented from being moved in the second card slot. The second connecting beam is arranged correspondingly to the first card slot. In a case that a card is placed in the first card slot, the card may be supported and limited by the second connecting beam, and may be prevented from being moved in the first card slot. The first connecting beam and the second connecting beam may enhance the strength of the card tray, and may also support and limit cards in the card slots. There is no need to arrange a steel sheet, so that a thickness of the card tray may be reduced. During cooperation, the card holder and the card tray have a small overall thickness and consume a small space, which is conducive to the thinning and miniaturization design of a device and improves user experience.

### BRIEF DESCRIPTION OF THE DRAWINGS

FIG. 1a is a schematic structural diagram of an upper base;
FIG. 1b is a schematic exploded view of an upper base;
FIG. 1c is a schematic structural diagram of a lower base;
FIG. 1d is a schematic exploded view of a lower base;
FIG. 2 is a schematic diagram of mounting a card on a card tray;
FIG. 3a is a schematic structural diagram of a card tray;
FIG. 3b is another schematic structural diagram of a card tray;
FIG. 3c is still another schematic structural diagram of a card tray;
FIG. 3d is still another schematic structural diagram of a card tray;
FIG. 3e is a cross-sectional view along a line B-B in FIG. 3c;
FIG. 4a is still another schematic structural diagram of a card tray;
FIG. 4b is an enlarged schematic diagram of a part A in FIG. 4a;
FIG. 4c is a schematic structural diagram of a connection between a convex rib and a sealing member;
FIG. 4d is still another schematic structural diagram of a card tray;
FIG. 4e is an enlarged schematic diagram of a part B in FIG. 4d;
FIG. 4f is a schematic structural diagram of a convex rib;
FIG. 5a is a schematic diagram in a case that an elastic arm is electrically communicated with a terminal;
FIG. 5b is another schematic diagram in a case that an elastic arm is electrically communicated with a terminal;
FIG. 5c is still another schematic diagram in a case that an elastic arm is electrically communicated with a terminal;
FIG. 5d is a schematic diagram in a case that an elastic arm is detached from a terminal;
FIG. 5e is another schematic diagram in a case that an elastic arm is detached from a terminal;
FIG. 5f is still another schematic diagram in a case that an elastic arm is detached from a terminal;
FIG. 6a is a schematic diagram of cooperation between an elastic arm and a rotating rod;
FIG. 6b is an enlarged schematic diagram of a part C in FIG. 6a;
FIG. 6c is a schematic structural diagram of an elastic arm;
FIG. 6d is a schematic diagram illustrating that a rotating rod drives an elastic arm to detach from a terminal;
FIG. 6e is an enlarged schematic diagram of a part D in FIG. 6d;
FIG. 6f is another schematic structural diagram of an elastic arm; and FIG. 6g is still another schematic structural diagram of an elastic arm.

### Reference signs

Seat body 10; Terminal 11; Ejection mechanism 13;
Upper terminal 14; Lower terminal 15; Upper plastic body 16;
Lower plastic body 17; Upper seat body 18; Lower seat body 19;
Elastic arm 20; Contact convex point 21; First elastic arm 201; Second elastic arm 202;
Rotating rod 30; Ejector rod 31;
Supporting body 40; First card slot 41; Second card slot 42;
First platform portion 43; Second platform portion 44;
First connecting beam 51; Second connecting beam 52;
Limiting baffle 60; Sealing member 61; Convex rib 62;
SIM card 71; T-flash card 72

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments.

The specification and claims of this application, and terms "first" and "second" are used to distinguish similar objects, but are unnecessarily used to describe a specific sequence or order. It may be understood that data used in such a way is interchangeable in proper circumstances, so that the embodiments of this application described herein can be implemented in other sequences than the sequence illustrated or described herein. In addition, "and/or" in this specification and the claims represents at least one of the connected objects, and the character "/" generally represents an "or" relationship between the associated objects.

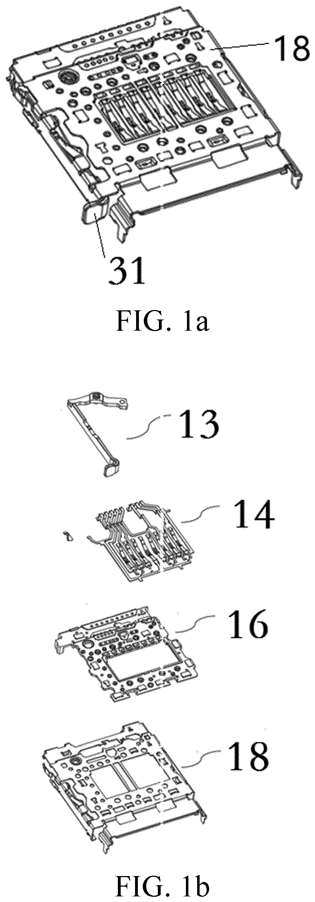

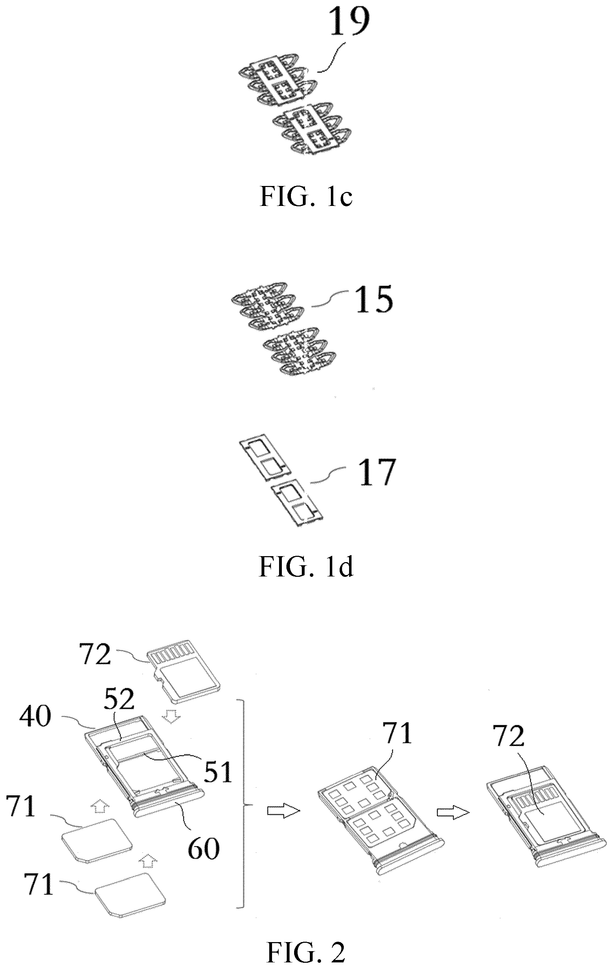

A card tray structure provided in the embodiments of this application is described below through specific embodiments and application scenarios thereof with reference to the accompanying drawings as shown in FIG. 1a to FIG. 6g.

The card tray structure in the embodiments of this application includes a card tray. One side of the card tray may be provided with a first card slot 41, and an other side of the card tray may be provided with a second card slot 42. The specific shapes and sizes of the first card slot 41 and the second card slot 42 may be selected based on actual needs. The card tray may include a supporting body 40. The supporting body 40 may be a frame enclosed by a frame edge. The frame may be a quadrangular frame. A first platform portion 43 may be arranged at an edge on one side of the frame edge to form the first card slot 41. In a case that a card is placed in the first card slot 41, the card may stop against the first platform portion 43, so that the card is stably placed in the first card slot 41. A second platform portion 44 may be arranged at an edge on the other side of the frame edge to form the second card slot 42. In a case that a card is placed in the second card slot 42, the card may stop against the second platform portion 44, so that the card is stably placed in the second card slot 42.

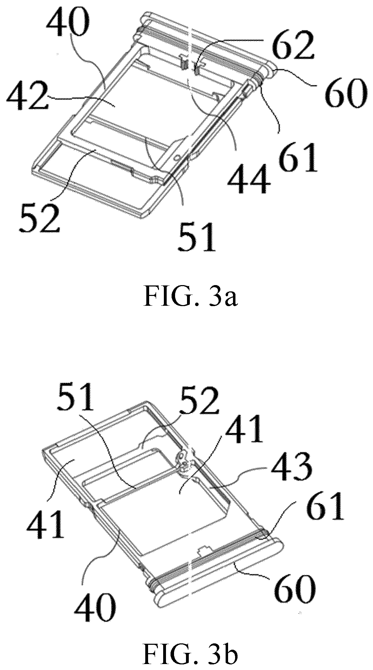

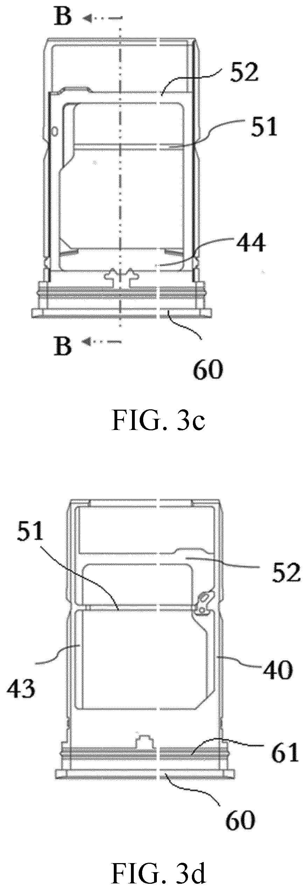

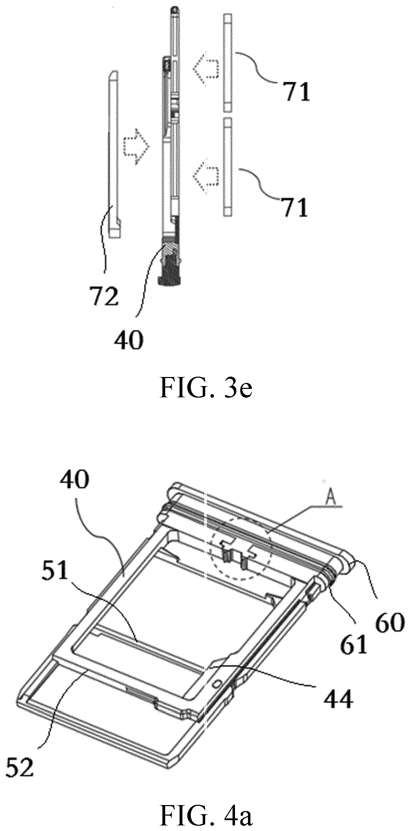

As shown in FIG. 3a and FIG. 3b, the first card slot 41 is located on one side of the card tray, and the second card slot 42 is located on an other side of the card tray. The first card slot 41 and the second card slot 42 may be arranged in a staggered manner. A subscriber identity module (Subscriber Identity Module, SIM) card may be placed in the first card slot 41, and a trans-flash (Trans-flash, T-flash) card may be placed in the second card slot 42. There may be two first card slots 41 and one second card slot 42. Two SIM cards and one T-flash card may be placed into the same card tray, or any one or two cards may be selected and placed into the same card tray.

In the embodiments of this application, as shown in FIG. 2 to FIG. 4a, the supporting body 40 may be the quadrangular frame, for example, a rectangular frame. The first platform portion 43 may be arranged at an edge on one side of the frame edge to form the first card slot 41. The SIM card may be placed in the first card slot 41, and the SIM card may be attached to the first platform portion 43. The first platform portion 43 may support the SIM card and may limit the SIM card, to make the SIM card stable. The second platform portion 44 may be arranged at an edge on an other side of the frame edge to form the second card slot 42. The T-flash card may be placed in the second card slot 42, and the T-flash card may be attached to the second platform portion 44. The second platform portion 44 may support the T-flash card and may limit the T-flash card, to make the T-flash card stable. The card tray has a simple overall structure and a volume that consumes a small space, which is conducive to thinning.

The card tray may include a first connecting beam 51 and a second connecting beam 52. Two ends of the first connecting beam 51 may be connected to the frame edge respectively. The first connecting beam 51 may enhance the strength of the card tray. The first connecting beam 51 and the second connecting beam 52 may be arranged in parallel and spaced apart. There may be two first card slots 41. The two first card slots 41 may be located on two sides of the first connecting beam 51 respectively. The SIM cards in the two first card slots 41 may be limited by the first connecting beam 51. Two ends of the second connecting beam 52 may be connected to the frame edge respectively. The second connecting beam 52 may enhance the strength of the card tray. The second platform portion 44 and the second connecting beam 52 may define the second card slot 42, which is conducive to reducing the volume of the overall structure. The first connecting beam 51 may be arranged correspondingly to the second card slot 42. In a case that a card is placed in the second card slot 42, the card may be supported and limited by the first connecting beam 51, and may be prevented from being moved in the second card slot 42. The second connecting beam 52 may be arranged correspondingly to the first card slot 41. In a case that a card is placed in the first card slot 41, the card may be supported and limited by the second connecting beam 52, and may be prevented from being moved in the first card slot 41, so that the card is placed in the card slot stably. The card tray may be integrally formed to enhance integrity and simplify a manufacturing process.

In the card tray structure of the embodiments of this application, the supporting body 40 may be the frame enclosed by the frame edge. The first connecting beam 51 and the second connecting beam 52 may be arranged to enhance the overall strength of the card tray, and the card tray is not easily deformed. The first connecting beam 51 is arranged correspondingly to the second card slot 42. In a case that a card is placed in the second card slot 42, the card may be supported and limited by the first connecting beam 51, and may be prevented from being moved in the second card slot 42. The second connecting beam 52 is arranged correspondingly to the first card slot 41. In a case that a card is placed in the first card slot 41, the card may be supported and limited by the second connecting beam 52, and may be prevented from being moved in the first card slot 41. The first connecting beam 51 and the second connecting beam 52 may enhance the strength of the card tray, and may also support and limit a card in the card slot. There is no need to arrange a steel sheet, so that a thickness of the card tray may be reduced. During cooperation, a card holder and the card tray have a small overall thickness and consume a small space, which is conducive to the thinning and miniaturization design of the device and improves user experience.

In some embodiments, a surface of a side of the first connecting beam 51 facing the second card slot 42 is planar and coplanar with a surface of the second platform portion 44. That is, the first connecting beam 51 may be arranged correspondingly to the second card slot 42. The surface of the side of the first connecting beam 51 facing the second card slot 42 is planar and coplanar with the surface of the second platform portion 44. The surface of the side of the first connecting beam 51 facing the second card slot 42 may support the T-flash card in the second card slot 42 and may limit the T-flash card, to prevent the T-flash card from floating up and down.

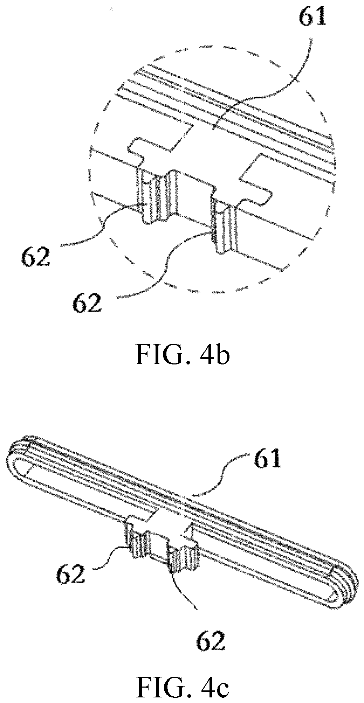

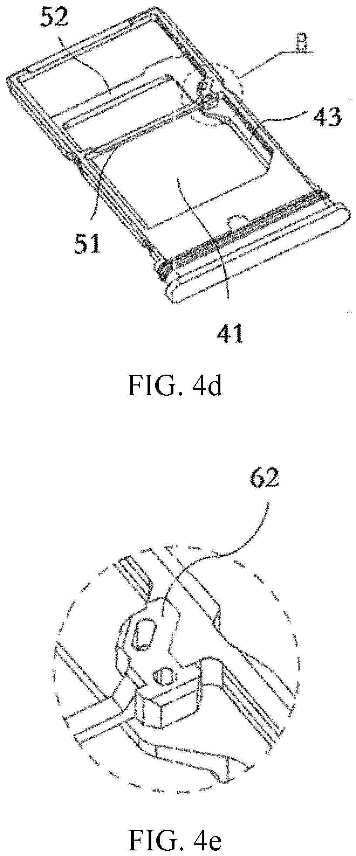

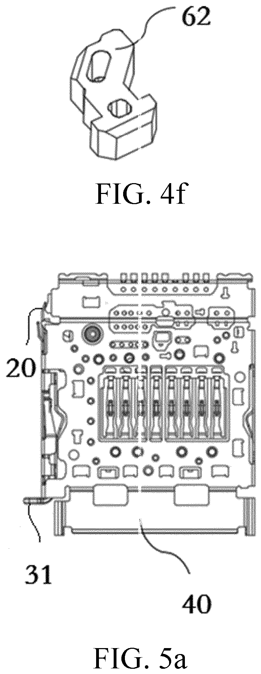

Optionally, as shown in FIG. 2 to FIG. 4d, a surface of a side of the second connecting beam 52 facing the first card slot 41 is planar and coplanar with a surface of the first platform portion 43. The surface of the side of the second connecting beam 52 facing the first card slot 41 may support the SIM card in the first card slot 41 and may limit the SIM card, to prevent the SIM card from floating up and down. The first connecting beam 51 and the second connecting beam 52 may enhance the overall strength of the card tray and may support the card, to make the card stable. There is no need to add a steel sheet to a middle layer of the card tray, which is conducive to thinning, so that an overall thickness may be reduced by more than 0.1 mm. In a manufacturing process, the supporting body 40, the first connecting beam 51, and the second connecting beam 52 may be integrally formed, which is conducive to enhancing integrity and simplifies the manufacturing process.

In some embodiments, the card tray may further include: a limiting baffle 60. The limiting baffle 60 may be arranged on the edge of the frame edge of the supporting body 40, or may be arranged on an outer edge of the frame edge of the supporting body 40, so that in a case that the supporting body of the card tray is inserted into an accommodating groove of the card holder, the supporting body may be limited by the limiting baffle 60, to facilitate removing the supporting body from the accommodating groove.

Optionally, as shown in FIG. 2 to FIG. 3d and FIG. 4a, a sealing member 61 may be arranged on a side of the limiting baffle 60 close to the frame edge. The sealing member 61 may be an elastic member. For example, the sealing member 61 may be a silicone ring. The sealing member 61 may have a sealing effect and can prevent water and dust.

Optionally, the sealing member 61 extends into the second card slot 42 and forms a convex rib 62 on an inner side wall of the second card slot 42. The convex rib 62 and the sealing member 61 may be integrally formed, which can reduce a consumed space.

In some embodiments, convex ribs 62 may be arranged on inner side walls of the first card slot 41 and the second card slot 42. Forces may be applied to cards placed on the first card slot 41 and the second card slot 42 by the convex ribs 62, to prevent the cards from being easily to removed. The convex rib 62 may be an elastic rubber, consumes a small volume, and reduces an overall space of the card tray and the card holder, which is conducive to miniaturization of a device. A part of the sealing member 61 may extend toward the card slot to form the convex rib 62 on an inner side wall of the second card slot 42. The sealing member 61 and the convex rib 62 may be made of a silicone material. In a case that the card is placed in the second card slot 42, the convex rib 62 interferes with the card to provide a pressure to support the card and prevent the card from falling, which simplifies the structure and reduces the consumed space. In manufacturing, the convex rib 62 on the inner side wall of the second card slot 42 and the sealing member 61 may be integrated, and may be made by using a same mold and a same gate without additional costs. For SIM cards in the two first card slots 41, the convex rib 62 made of a silicone material may be used to support the cards. For the SIM cards in the two first card slots 41, the convex rib 62 may be formed by sharing one silicone block, or may be formed by sharing a mold with a waterproof silicone ring and by adding only one gate, which leads to a simple and compact structure.

An embodiment of this application provides a card tray assembly, including: the card tray structure and the card holder described in the foregoing embodiment. The card tray structure is arranged on the card holder, and the card tray structure may be detachably arranged on the card holder. The card tray has high strength, and there is no need to arrange a steel sheet, so that a thickness of the card tray may be reduced. During cooperation, the card holder and the card tray structure have a small overall thickness and consume a small space, which is conducive to the thinning and miniaturization design of the device and improves user experience.

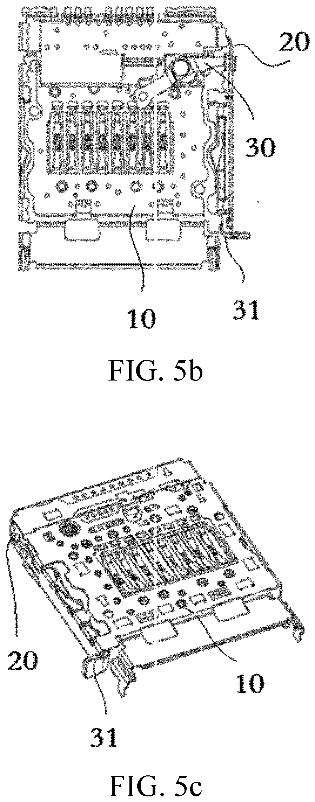

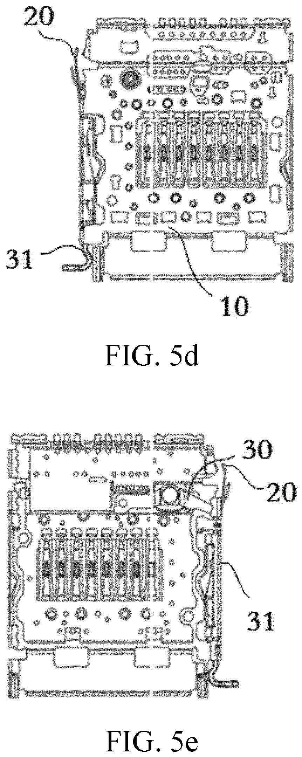

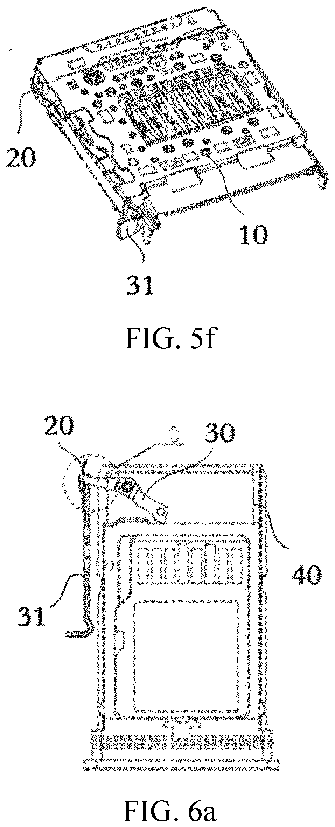

As shown in FIG. 1a to FIG. 1d and FIG. 5b, the card holder may include: a seat body 10, an ejection mechanism 13, and a detection mechanism. A terminal 11 is arranged on the seat body 10. The seat body 10 may include an upper seat body 18 and a lower seat body 19. The upper seat body 18 is connected to the lower seat body 19. The upper seat body 18 may be a metal shell, for example, an iron shell. An accommodating groove may be defined between the upper seat body 18 and the lower seat body 19, and a card tray with a card may be placed in the accommodating groove. As shown in FIG. 1a to FIG. 1d, the terminal may include an upper terminal 14 and a lower terminal 15. The lower seat body 19 may include a lower plastic body 17 and the lower terminal 15 arranged on the lower plastic body 17. The upper terminal 14 may be arranged on the upper seat body 18. An upper plastic body 16 may be arranged on the upper seat body 18, and the upper terminal 14 may be arranged on the upper plastic body 16. The ejection mechanism 13 may be arranged on the seat body 10. The detection mechanism may include an elastic arm 20. One end of the elastic arm 20 is connected to the seat body 10, and an other end of the elastic arm 20 may be spaced apart from the seat body 10. The ejection mechanism 13 may drive the other end of the elastic arm 20 to move. In a case that the ejection mechanism 13 is in a first state, the other end of the elastic arm 20 stops against the terminal 11, and the other end of the elastic arm 20 may be electrically communicated with the terminal 11. In a case that the ejection mechanism 13 is in a second state, the ejection mechanism 13 may drive the other end of the elastic arm 20 to detach from the terminal 11. In a case that the card tray is clamped on the seat body 10, the card tray may drive the ejection mechanism 13 to be in the second state, so that the other end of the elastic arm 20 is disconnected from the terminal 11, and the inserted card tray may drive the ejection mechanism 13 to switch between the first state and the second state.

One end of the elastic arm 20 is connected to the seat body 10, and the ejection mechanism 13 may drive the other end of the elastic arm 20 to move. Further, the other end of the elastic arm 20 stops against or is detached from the terminal 11, so that the other end of the elastic arm 20 is electrically communicated with or disconnected from the terminal 11, to enable the detection mechanism to implement a detection function. During use, in a case that the card tray is inserted to enter a use state, the card tray may drive the ejection mechanism 13 to be in the second state, and the ejection mechanism 13 drives the other end of the elastic arm 20 to detach from the terminal 11, thereby implementing the detection function. A reaction force at the other end of the elastic arm 20 presses the ejection mechanism 13 tightly to prevent the ejection mechanism 13 from shaking and making noise. Since the reaction force does not act on the card tray, the holding force of the card tray can be prevented from being weakened, which prevents the card tray from falling out when the phone is dropped, and ensures the stability of the cooperation between the card tray and the card holder.

In some embodiments, as shown in FIG. 5a to FIG. 5f, the elastic arm 20 may be arranged adjacent to an edge of the seat body 10, and the elastic arm 20 may extend along the edge of the seat body 10, to facilitate cooperation between the elastic arm 20 and the ejection mechanism 13, so that the ejection mechanism 13 can drive the other end of the elastic arm 20 to move, to enable the other end of the elastic arm 20 to stop against or detach from the terminal.

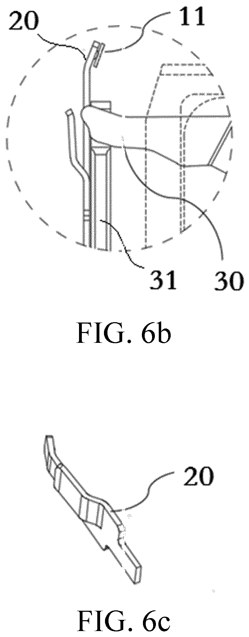

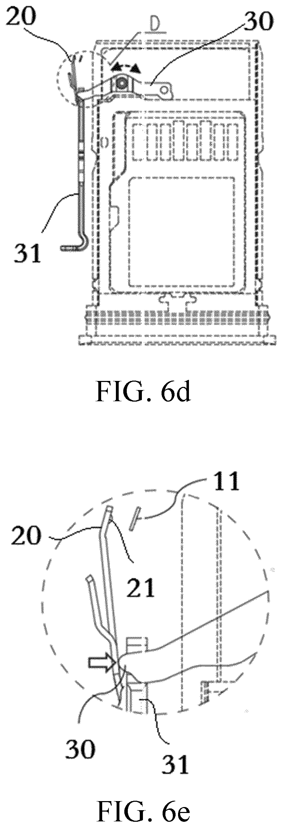

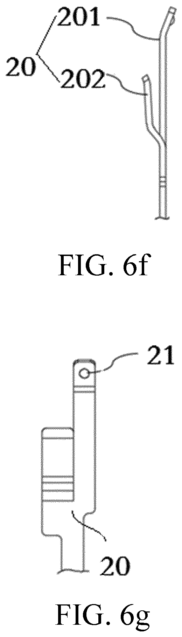

In some other embodiments, as shown in FIG. 5b, FIG. 5e, and FIG. 6a to FIG. 6e, the ejection mechanism 13 may include: a rotating rod 30. The rotating rod 30 is rotatably connected to the seat body 10. The rotating rod 30 may be arranged adjacent to the edge of the seat body 10 and may be rotatably connected through a rotating shaft or a screw. One end of the rotating rod 30 may be connected to the other end of the elastic arm 20. Movement of the one end of the rotating rod 30 may drive the other end of the elastic arm 20 to move, to enable the other end of the elastic arm 20 to stop against or detach from the terminal. In a case that the ejection mechanism 13 is in the second state, one end of the rotating rod 30 may drive the other end of the elastic arm 20 to detach from the terminal 11. In a case that the card tray is inserted, the card tray may drive the ejection mechanism 13 to be in the second state. A state of the ejection mechanism 13 may be controlled by a state of the inserted card tray, and further, the other end of the elastic arm 20 may be controlled to stop against or detach from the terminal 11, so that the other end of the elastic arm 20 is electrically communicated with or disconnected from the terminal 11. The elastic arm 20 may include a first elastic arm 201 and a second elastic arm 202. A lower end of the first elastic arm 201 may be connected to the seat body 10, a lower end of the second elastic arm 202 may be connected to the first elastic arm 201, and the second elastic arm 202 may be located on a side of the first elastic arm 201 facing away from the rotating rod 30. An upper end of the second elastic arm 202 may be spaced apart from the first elastic arm 201, and the rotating rod 30 may drive the first elastic arm 201 to move. As the rotating rod 30 slides downward along the first elastic arm 201, an upper end of the first elastic arm 201 and the second elastic arm 202 move away from the terminal 11. During movement, the second elastic arm 202 may increase an acting force to press the ejection mechanism 13 tightly, which prevents the ejection mechanism 13 from shaking and making noise, prevents the card tray from falling out when a mobile phone drops, and ensures stability of the cooperation between the card tray and the card holder. Bending radians of the first elastic arm 201 and the second elastic arm 202 may be different, so that an arc-shaped edge of the rotating rod 30 can slide more smoothly and ejects the first elastic arm 201 by a suitable distance while ejecting the second elastic arm 202, so that the rotating rod 30 can drive the elastic arm more stably.

In the embodiments of this application, as shown in FIG. 5a to FIG. 6e, the ejection mechanism 13 may further include: an ejector rod 31. One end of the ejector rod 31 is connected to the other end of the rotating rod 30, and the ejector rod 31 may extend along the edge of the seat body 10. In a case that the ejector rod 31 moves, the ejector rod 31 may drive the rotating rod 30 to rotate. The ejector rod 31 may drive the rotating rod 30 to rotate, to enable the rotating rod 30 to drive the other end of the elastic arm 20 to detach from the terminal 11.

In some embodiments, as shown in FIG. 6b and FIG. 6e, one end of the rotating rod 30 has an arc-shaped surface, and the arc-shaped surface stops against the other end of the elastic arm 20. During driving, one end of the rotating rod 30 may slide relative to the other end of the elastic arm 20, so that the other end of the elastic arm 20 may be driven by the one end of the rotating rod 30.

Optionally, one end of the rotating rod 30 may be provided with a chute, the other end of the elastic arm 20 may be movably arranged in the chute, so that the one end of the rotating rod 30 may slide stably relative to the other end of the elastic arm 20 to avoid slippage.

Optionally, the other end of the elastic arm 20 is provided with a chute, and the chute extends along the length direction of the elastic arm 20. One end of the rotating rod 30 may be movably arranged in the chute, so that the one end of the rotating rod 30 may slide stably relative to the other end of the elastic arm 20 to avoid slippage.

In the embodiments of this application, as shown in FIG. 6e and FIG. 6g, a contact convex point 21 may be arranged in a region of the other end of the elastic arm 20 that stops against the terminal 11. There may be one or more contact convex points 21. The other end of the elastic arm 20 may come into stable contact with the terminal 11 through the contact convex point 21.

In an application process, the elastic arm 20 in the detection mechanism may be designed to be driven by the rotating rod 30 on a side of the rotating rod 30, and the card holder is directly driven in a direction in which the card tray is inserted. The terminal may be designed at a position opposite the other end of the elastic arm 20, and the terminal may be wrapped by plastic and expose a metal contact wall. In a case that the card tray is not inserted, the rotating rod 30 and the second elastic arm 202 of the elastic arm 20 may be in a detached state. The other end of the elastic arm 20 generates a pressing force on the terminal, and the contact convex point 21 at an end of the elastic arm may come into stable contact with the contact wall of the terminal. In a case that the card tray is inserted, the rotating rod 30 is pushed by the card tray to rotate. The rotating rod 30 drives the other end of the elastic arm 20. In a case that the card tray is inserted to the bottom, the other end of the elastic arm 20 can be completely driven away, so that the contact convex point is detached from the terminal, and a detection switch is switched on to implement the detection function.

Optionally, an insulation layer may be arranged between the seat body 10 and the terminal 11. The insulation layer may be a plastic layer. The insulation layer may prevent short-circuit between the terminal 11 and the seat body 10. The insulation layer may be an elastic layer, which has a buffering effect and can reduce damage to the terminal 11.

Optionally, the seat body 10 may be provided with an accommodating groove. The card tray is detachably arranged in the accommodating groove. The card tray further includes a limiting baffle 60. The limiting baffle 60 may be arranged on the edge of the frame edge of the supporting body 40, and at least part of the limiting baffle 60 is located outside the accommodating groove. In a case that the supporting body of the card tray is inserted into the accommodating groove, the supporting body may be limited by the limiting baffle 60 to facilitate removing the supporting body from the accommodating groove. In a case that the card tray is clamped on the seat body 10, for example, in a case that a supporting body of the card tray is inserted into the accommodating groove, the card tray can drive the ejection mechanism 13 to be in the second state.

During use, a state of the ejection mechanism 13 can be changed depending on a situation of the card tray on the seat body. The card tray may drive the ejection mechanism 13 to be in the second state. The ejection mechanism 13 may drive the other end of the elastic arm 20 to move, to enable the other end of the elastic arm 20 to stop against or detach from the terminal 11, so that the other end of the elastic arm 20 is electrically communicated with or disconnected from the terminal 11, to enable the detection mechanism to implement the detection function. During use, in a case that the card tray is inserted to enter a use state, the card tray may drive the ejection mechanism 13 to be in the second state, and the ejection mechanism 13 drives the other end of the elastic arm 20 to detach from the terminal 11, thereby implementing the detection function. A reaction force at the other end of the elastic arm 20 presses the ejection mechanism 13 tightly to prevent the ejection mechanism 13 from shaking and making noise. Since the reaction force does not act on the card tray, the holding force of the card tray can be prevented from being weakened, which prevents the card tray from falling out when the phone is dropped, and ensures the stability of the cooperation between the card tray and the card holder.

An embodiment of this application provides an electronic device, including the card tray assembly described in the foregoing embodiment. The electronic device having the card tray assembly in the foregoing embodiments has a small overall thickness during cooperation between the card holder and the card tray, which is conducive to the thinning and miniaturization design of the device and improving user experience.

## Claims

1. A card tray structure, comprising:
a card tray, wherein two first card slots (41) are arranged on one side of the card tray, and a second card slot (42) is arranged on an other side of the card tray;
the card tray comprises a supporting body (40), a first connecting beam (51), and a second connecting beam (52), wherein the supporting body (40) is a frame enclosed by a frame edge, a first platform portion (43) is arranged at an edge on one side of the frame edge to form the first card slot (41), a second platform portion (44) is arranged at an edge on an other side of the frame edge to form the second card slot (42), two ends of the first connecting beam (51) are respectively connected to the frame edge, and the two first card slots (41) are respectively located on two sides of the first connecting beam (51); and
two ends of the second connecting beam (52) are respectively connected to the frame edge, the second platform portion (44) and the second connecting beam (52) define the second card slot (42), the first connecting beam (51) is arranged correspondingly to the second card slot (42), and the second connecting beam (52) is arranged correspondingly to the first card slots (41).

2. The card tray structure according to claim 1, wherein a surface of a side of the first connecting beam (51) facing the second card slot (42) is planar and coplanar with a surface of the second platform portion (44).

3. The card tray structure according to claim 1, wherein a surface of a side of the second connecting beam (52) facing the first card slots (41) is planar and coplanar with a surface of the first platform portion (43).

4. The card tray structure according to claim 1, wherein the card tray further comprises:
a limiting baffle (60), wherein the limiting baffle (60) is arranged at an edge of a frame edge of the supporting body (40);
wherein a sealing member (61) is arranged on a side of the limiting baffle (60) close to the frame edge;
wherein the sealing member (61) extends into the second card slot (42) and forms a convex rib (62) on an inner side wall of the second card slot (42).

5. The card tray structure according to claim 1, wherein convex ribs (62) are arranged on inner side walls of the first card slots (41) and the second card slot (42).

6. A card tray assembly, comprising:
the card tray structure according to any one of claims 1 to 5; and
a card holder, wherein the card tray structure is arranged on the card holder.

7. The card tray assembly according to claim 6, wherein the card holder comprises: a seat body (10), an ejection mechanism (13), and a detection mechanism, a terminal (11) is arranged on the seat body (10), the ejection mechanism (13) is arranged on the seat body (10), the detection mechanism comprises an elastic arm (20), and one end of the elastic arm (20) is connected to the seat body (10);
in a case that the ejection mechanism (13) is in a first state, an other end of the elastic arm (20) stops against the terminal (11) and is electrically communicated with the terminal (11);
in a case that the ejection mechanism (13) is in a second state, the ejection mechanism (13) drives the other end of the elastic arm (20) to detach from the terminal (11); and
in a case that the card tray is clamped on the seat body (10), the card tray drives the ejection mechanism (13) to switch from the first to the second state.

8. The card tray assembly according to claim 7, wherein the elastic arm (20) is arranged adjacent to an edge of the seat body (10), and the elastic arm (20) extends along the edge of the seat body (10).

9. The card tray assembly according to claim 7 or 8, wherein the ejection mechanism (13) comprises:
a rotating rod (30), wherein the rotating rod (30) is rotatably connected to the seat body (10), and one end of the rotating rod (30) is connected to the other end of the elastic arm (20); and
in a case that the ejection mechanism (13) is in the second state, the one end of the rotating rod (30) drives the other end of the elastic arm (20) to detach from the terminal (11).

10. The card tray assembly according to claim 9, wherein the ejection mechanism (13) further comprises:
an ejector rod (31), wherein one end of the ejector rod (31) is connected to an other end of the rotating rod (30), the ejector rod (31) extends along the edge of the seat body (10), and in a case that the ejector rod (31) moves, the ejector rod (31) drives the rotating rod (30) to rotate.

11. The card tray assembly according to claim 9, wherein one end of the rotating rod (30) has an arc-shaped surface, and the arc-shaped surface stops against the other end of the elastic arm (20); or
one end of the rotating rod (30) is provided with a chute, and the other end of the elastic arm (20) is movably arranged in the chute; or
the other end of the elastic arm (20) is provided with a chute, the chute extends along the length direction of the elastic arm (20), and one end of the rotating rod (30) is movably arranged in the chute.

12. The card tray assembly according to claim 7, wherein a contact convex point (21) is arranged in a region of the other end of the elastic arm (20) that stops against the terminal (11).

13. The card tray assembly according to claim 7, wherein an insulation layer is arranged between the seat body (10) and the terminal (11).

14. The card tray assembly according to claim 7, wherein the seat body (10) is provided with an accommodating groove, the card tray is detachably arranged in the accommodating groove, and the card tray comprises: a limiting baffle (60), the limiting baffle (60) is arranged at an edge of a frame edge of a supporting body (40), and at least part of the limiting baffle (60) is located outside the accommodating groove.

15. An electronic device, comprising the card tray assembly according to any one of claims 6 to 14.

## Patentansprüche

1. Kartenfachstruktur, umfassend:
ein Kartenfach, wobei zwei erste Kartenschlitze (41) auf einer Seite des Kartenfachs angeordnet sind und ein zweiter Kartenschlitz (42) auf einer anderen Seite des Kartenfachs angeordnet ist;
das Kartenfach einen Tragkörper (40), einen ersten Verbindungsbalken (51) und einen zweiten Verbindungsbalken (52) umfasst, wobei der Tragkörper (40) ein von einem Rahmenrand umschlossener Rahmen ist, ein erster Plattformabschnitt (43) an einem Rand auf einer Seite des Rahmenrands angeordnet ist, um den ersten Kartenschlitz (41) zu bilden, ein zweiter Plattformabschnitt (44) an einem Rand auf einer anderen Seite des Rahmenrands angeordnet ist, um den zweiten Kartenschlitz (42) zu bilden, zwei Enden des ersten Verbindungsbalkens (51) jeweils mit dem Rahmenrand verbunden sind und die zwei ersten Kartenschlitze (41) jeweils auf zwei Seiten des ersten Verbindungsbalkens (51) angeordnet sind; und
zwei Enden des zweiten Verbindungsbalkens (52) jeweils mit dem Rahmenrand verbunden sind, der zweite Plattformabschnitt (44) und der zweite Verbindungsbalken (52) den zweiten Kartenschlitz (42) definieren, der erste Verbindungsbalken (51) entsprechend dem zweiten Kartenschlitz (42) angeordnet ist und der zweite Verbindungsbalken (52) entsprechend den ersten Kartenschlitzen (41) angeordnet ist.

2. Kartenfachstruktur nach Anspruch 1, wobei eine Oberfläche einer Seite des ersten Verbindungsbalkens (51), die dem zweiten Kartenschlitz (42) zugewandt ist, eben und koplanar mit einer Oberfläche des zweiten Plattformabschnitts (44) ist.

3. Kartenfachstruktur nach Anspruch 1, wobei eine Oberfläche einer Seite des zweiten Verbindungsbalkens (52), die den ersten Kartenschlitzen (41) zugewandt ist, eben und koplanar mit einer Oberfläche des ersten Plattformabschnitts (43) ist.

4. Kartenfachstruktur nach Anspruch 1, wobei das Kartenfach ferner Folgendes umfasst:
eine Begrenzungsablenkplatte (60), wobei die Begrenzungsablenkplatte (60) an einem Rand eines Rahmenrandes des Tragkörpers (40) angeordnet ist;
wobei ein Dichtungselement (61) an einer Seite der Begrenzungsablenkplatte (60) nahe dem Rahmenrand angeordnet ist;
wobei sich das Dichtungselement (61) in den zweiten Kartenschlitz (42) erstreckt und eine konvexe Rippe (62) an einer inneren Seitenwand des zweiten Kartenschlitzes (42) bildet.

5. Kartenfachstruktur nach Anspruch 1, wobei konvexe Rippen (62) an inneren Seitenwänden der ersten Kartenschlitze (41) und des zweiten Kartenschlitzes (42) angeordnet sind.

6. Kartenfachanordnung, umfassend:
die Kartenfachstruktur nach einem der Ansprüche 1 bis 5; und
einen Kartenhalter, wobei die Kartenfachstruktur an dem Kartenhalter angeordnet ist.

7. Kartenfachanordnung nach Anspruch 6, wobei der Kartenhalter umfasst: einen Sitzkörper (10), einen Auswurfmechanismus (13) und einen Erkennungsmechanismus, eine Klemme (11) an dem Sitzkörper (10) angeordnet ist, der Auswurfmechanismus (13) an dem Sitzkörper (10) angeordnet ist, der Erkennungsmechanismus einen elastischen Arm (20) umfasst und ein Ende des elastischen Arms (20) mit dem Sitzkörper (10) verbunden ist;
in einem Fall, dass sich der Auswurfmechanismus (13) in einem ersten Zustand befindet, schlägt ein anderes Ende des elastischen Arms (20) an der Klemme (11) an und kommuniziert mit der Klemme (11) elektrisch;
in einem Fall, dass sich der Auswurfmechanismus (13) in einem zweiten Zustand befindet, treibt der Auswurfmechanismus (13) das andere Ende des elastischen Arms (20) an, um sich von der Klemme (11) zu lösen; und in einem Fall, dass das Kartenfach an dem Sitzkörper (10) geklemmt ist, treibt das Kartenfach den Auswurfmechanismus (13) an, um von dem ersten in den zweiten Zustand zu wechseln.

8. Kartenfachanordnung nach Anspruch 7, wobei der elastische Arm (20) benachbart zu einem Rand des Sitzkörpers (10) angeordnet ist und sich der elastische Arm (20) entlang des Randes des Sitzkörpers (10) erstreckt.

9. Kartenfachanordnung nach Anspruch 7 oder 8, wobei der Auswurfmechanismus (13) Folgendes umfasst:
eine Drehstange (30), wobei die Drehstange (30) drehbar mit dem Sitzkörper (10) verbunden ist und ein Ende der Drehstange (30) mit dem anderen Ende des elastischen Arms (20) verbunden ist; und
in einem Fall, dass sich der Auswurfmechanismus (13) in dem zweiten Zustand befindet, treibt das eine Ende der Drehstange (30) das andere Ende des elastischen Arms (20) an, um sich von der Klemme (11) zu lösen.

10. Kartenfachanordnung nach Anspruch 9, wobei der Auswurfmechanismus (13) ferner Folgendes umfasst:
eine Auswerferstange (31), wobei ein Ende der Auswerferstange (31) mit einem anderen Ende der Drehstange (30) verbunden ist, sich die Auswerferstange (31) entlang des Randes des Sitzkörpers (10) erstreckt und in dem Fall, dass sich die Auswerferstange (31) bewegt, treibt die Auswerferstange (31) die Drehstange (30) zur Drehung an.

11. Kartenfachanordnung nach Anspruch 9, wobei ein Ende der Drehstange (30) eine bogenförmige Oberfläche aufweist und die bogenförmige Oberfläche an dem anderen Ende des elastischen Arms (20) anschlägt; oder
ein Ende der Drehstange (30) mit einer Rutsche versehen ist und das andere Ende des elastischen Arms (20) beweglich in der Rutsche angeordnet ist; oder
das andere Ende des elastischen Arms (20) mit einer Rutsche versehen ist, sich die Rutsche entlang der Längsrichtung des elastischen Arms (20) erstreckt und ein Ende der Drehstange (30) beweglich in der Rutsche angeordnet ist.

12. Kartenfachanordnung nach Anspruch 7, wobei ein konvexer Kontaktpunkt (21) in einem Bereich des anderen Endes des elastischen Arms (20) angeordnet ist, der an der Klemme (11) anschlägt.

13. Kartenfachanordnung nach Anspruch 7, wobei eine Isolationsschicht zwischen dem Sitzkörper (10) und der Klemme (11) angeordnet ist.

14. Kartenfachanordnung nach Anspruch 7, wobei der Sitzkörper (10) mit einer Aufnahmenut versehen ist, das Kartenfach lösbar in der Aufnahmenut angeordnet ist und das Kartenfach umfasst: eine Begrenzungsablenkplatte (60), die Begrenzungsablenkplatte (60) an einem Rand eines Rahmenrandes eines Tragkörpers (40) angeordnet ist und sich zumindest ein Teil der Begrenzungsablenkplatte (60) außerhalb der Aufnahmenut befindet.

15. Elektronische Einrichtung, umfassend die Kartenfachanordnung nach einem der Ansprüche 6 bis 14.

## Revendications

1. Structure de plateau de carte, comprenant :
un plateau de carte, dans laquelle deux premières fentes de carte (41) sont disposées sur un côté du plateau de carte, et une seconde fente de carte (42) est disposée sur un autre côté du plateau de carte ;
le plateau de carte comprend un corps de support (40), une première tige de liaison (51) et une seconde tige de liaison (52), dans laquelle le corps de support (40) est un cadre entouré par un bord de cadre, une première partie de plateforme (43) est disposée en correspondance d'un bord sur un côté du bord de cadre pour former la première fente de carte (41), une seconde partie de plateforme (44) est disposée en correspondance d'un bord sur un autre côté du bord de cadre pour former la seconde fente de carte (42), deux extrémités de la première tige de liaison (51) sont respectivement reliées au bord de cadre, et les deux premières fentes de carte (41) sont respectivement situées sur les deux côtés de la première tige de liaison (51) ; et
les deux extrémités de la seconde tige de liaison (52) sont respectivement reliées au bord de cadre, la seconde partie de plateforme (44) et la seconde tige de liaison (52) définissent la seconde fente de carte (42), la première tige de liaison (51) est disposée de manière correspondante à la seconde fente de carte (42), et la seconde tige de liaison (52) est disposée de manière correspondante aux premières fentes de carte (41).

2. Structure de plateau de carte selon la revendication 1, dans laquelle une surface d'un côté de la première tige de liaison (51) faisant face à la seconde fente de carte (42) est planaire et coplanaire avec une surface de la seconde partie de plateforme (44).

3. Structure de plateau de carte selon la revendication 1, dans laquelle une surface d'un côté de la seconde tige de liaison (52) faisant face aux premières fentes de carte (41) est planaire et coplanaire avec une surface de la première partie de plateforme (43).

4. Structure de plateau de carte selon la revendication 1, dans laquelle le plateau de carte comprend en outre :
un déflecteur de limitation (60), dans laquelle le déflecteur de limitation (60) est disposé en correspondance d'un bord d'un bord de cadre du corps de support (40) ;
dans laquelle un élément d'étanchéité (61) est disposé sur un côté du déflecteur de limitation (60) proche du bord de cadre ;
dans laquelle l'élément d'étanchéité (61) s'étend dans la seconde fente de carte (42) et forme une nervure convexe (62) sur une paroi latérale intérieure de la seconde fente de carte (42).

5. Structure de plateau de carte selon la revendication 1, dans laquelle des nervures convexes (62) sont disposées sur les parois latérales intérieures des premières fentes de carte (41) et de la seconde fente de carte (42).

6. Ensemble plateau de carte, comprenant :
la structure de plateau de carte selon l'une quelconque des revendications 1 à 5 ; et
un support de carte, dans lequel la structure de plateau de carte est disposée sur le support de carte.

7. Ensemble plateau de carte selon la revendication 6, dans lequel le support de carte comprend : un corps de siège (10), un mécanisme d'éjection (13) et un mécanisme de détection, une borne (11) est disposée sur le corps de siège (10), le mécanisme d'éjection (13) est disposé sur le corps de siège (10), le mécanisme de détection comprend un bras élastique (20), et une extrémité du bras élastique (20) est reliée au corps de siège (10) ; dans le cas où le mécanisme d'éjection (13) se trouve dans un premier état, une autre extrémité du bras élastique (20) s'arrête contre la borne (11) et est en communication électrique avec la borne (11) ;
dans le cas où le mécanisme d'éjection (13) se trouve dans un second état, le mécanisme d'éjection (13) entraîne l'autre extrémité du bras élastique (20) à se détacher de la borne (11) ; et
dans le cas où le plateau de carte est serré sur le corps de siège (10), le plateau de carte entraîne le mécanisme d'éjection (13) à commuter du premier état au second état.

8. Ensemble plateau de carte selon la revendication 7, dans lequel le bras élastique (20) est disposé de façon adjacente à un bord du corps de siège (10), et le bras élastique (20) s'étend le long du bord du corps de siège (10).

9. Ensemble plateau de carte selon la revendication 7 ou 8, dans lequel le mécanisme d'éjection (13) comprend :
une tige rotative (30), dans lequel la tige rotative (30) est reliée de manière rotative au corps de siège (10), et une extrémité de la tige rotative (30) est reliée à l'autre extrémité du bras élastique (20) ; et
dans le cas où le mécanisme d'éjection (13) se trouve dans le second état, l'une des extrémités de la tige rotative (30) entraîne l'autre extrémité du bras élastique (20) à se détacher de la borne (11).

10. Ensemble plateau de carte selon la revendication 9, dans lequel le mécanisme d'éjection (13) comprend en outre :
une tige éjectrice (31), dans lequel une extrémité de la tige éjectrice (31) est reliée à une autre extrémité de la tige rotative (30), la tige éjectrice (31) s'étend le long du bord du corps de siège (10), et dans le cas où la tige éjectrice (31) se déplace, la tige éjectrice (31) entraîne la rotation de la tige rotative (30).

11. Ensemble plateau de carte selon la revendication 9, dans lequel une extrémité de la tige rotative (30) présente une surface arquée, et la surface arquée s'arrête contre l'autre extrémité du bras élastique (20) ; ou
une extrémité de la tige rotative (30) est pourvue d'une glissière, et l'autre extrémité du bras élastique (20) est disposée de manière mobile dans la glissière ; ou
l'autre extrémité du bras élastique (20) est pourvue d'une glissière, la glissière s'étend le long du sens de la longueur du bras élastique (20), et une extrémité de la tige rotative (30) est disposée de manière mobile dans la glissière.

12. Ensemble plateau de carte selon la revendication 7, dans lequel un point de contact convexe (21) est disposé dans une zone de l'autre extrémité du bras élastique (20) qui s'arrête contre la borne (11).

13. Ensemble plateau de carte selon la revendication 7, dans lequel une couche isolante est disposée entre le corps de siège (10) et la borne (11).

14. Ensemble plateau de carte selon la revendication 7, dans lequel le corps de siège (10) est pourvu d'une rainure de logement, le plateau de carte est disposé de manière amovible dans la rainure de logement, et le plateau de carte comprend : un déflecteur de limitation (60), le déflecteur de limitation (60) est disposé en correspondance d'un bord d'un bord de cadre d'un corps de support (40), et au moins une partie du déflecteur de limitation (60) est située à l'extérieur de la rainure de logement.

15. Dispositif électronique, comprenant l'ensemble plateau de carte selon l'une quelconque des revendications 6 à 14.
